# EUROPÄISCHE PATENTSCHRIFT

(11) **EP 2 825 485 B1**
(45) Veröffentlichungstag und Bekanntmachung des Hinweises auf die Patenterteilung: **09.03.2016**
(21) Anmeldenummer: 13716184.0
(22) Anmeldetag: 12.03.2013
(51) Int. Cl.: B65G 1/137

(54) **VERFAHREN UND VORRICHTUNG ZUM EFFEKTIVEN ZUSAMMENSTELLEN VON KOMMISSIONS-PALETTEN**
METHOD AND DEVICE FOR EFFECTIVELY COMPILING COMMISSION PALLETS
PROCÉDÉ ET DISPOSITIF DESTINÉS À ASSEMBLER EFFICACEMENT DES PALETTES D'EXPÉDITION DE COMMANDE

(30) Priorität: 13.03.2012 DE 102012004990
(43) Veröffentlichungstag der Anmeldung: 21.01.2015
(73) Patentinhaber: Grenzebach Maschinenbau GmbH, 86663 Asbach-Baeumenheim (DE)
(72) Erfinder: BAUMANN, Michael, 85774 Unterföhring (DE)
(74) Vertreter: Kindermann, Peter
(86) Internationale Anmeldenummer: PCT/DE2013/000135
(87) Internationale Veröffentlichungsnummer: WO 2013/135227

(56) Entgegenhaltungen:
- WO-A1-2008/068264
- DE-A1-102008 035 178

## Beschreibung

Die vorliegende Erfindung betrifft ein Verfahren und eine Vorrichtung zum effektiven Zusammenstellen von Kommissions - Paletten.
In einer Vielzahl von Unternehmensbereichen, zum Beispiel dem Handel mit Lebensmitteln und Haushaltsartikeln oder industrie - und Haushaltsprodukten, liegen Waren in sortenreinen Quellpaletten mit gleichartigen Gebinden vor. Ein Gebinde kann hierbei ein verpacktes oder unverpacktes Stückgut oder eine Warenzusammenstellung wie beispielsweise eine Kiste, ein Karton oder eine Steige mit Schüttgut oder mehreren Einzelgütern wie Getränkeflaschen oder Molkereiprodukten sein. Eine Gruppe von horizontal angeordneten Gebinden wird als eine Gebindelage bezeichnet. Eine Anzahl von mehreren vertikal aufeinander gestapelten Gebindelagen wird dagegen als eine Palette bezeichnet, im Allgemeinen in Verbindung mit einem entsprechenden Trägersystem, meist in Form einer stabilen Holzkonstruktion.
Eine so genannte sortenreine Gebindelage oder Palette enthält nur Gebinde derselben Sorte oder Art.
Zur Zusammenstellung einer Lieferung an einen bestimmten Kunden müssen hieraus Paletten mit unterschiedlicher Bestückung an bestimmten Gebindelagen oder Gebinden zusammengestellt werden. Handelt es sich hierbei um eine Palette mit unterschiedlichen, jeweils sortenreinen Lagen, wird diese als eine lagenweise sortenreine oder Regenbogenpalette ( Rainbow Pallet ) bezeichnet. Vertikal aufeinander geschichtete Gebinde werden so genannte Stapel genannt.
Handelt es sich bei einer bestimmten Palette um eine Lieferung bei der lagenweise, stapelweise oder gemischte Zusammenstellungen von verschiedenen Gebinden erforderlich sind, wird von einer gemischten Palette gesprochen.

Zum Stand der Technik ist aus der WO 2008/068264 A1 ein Verfahren und eine Vorrichtung zum Kommissionieren von Waren, ein Lagerverwaltungssystem und die Verwendung von wenigstens einem autarken Transportfahrzeug bekannt.
Hierin werden im Verfahren nach Anspruch 1 im Wesentlichen das Beladen eines autarken Transportfahrzeugs, das automatische Fahren benötigter Palettierungseinheiten mittels eines autarken Transportfahrzeugs und das sequentielle Entladen der Palettierungseinheiten mittels eines Palettierungsroboters nach einem vorab ermittelten Packmuster beansprucht.
Nach den Angaben im Anspruch 4 werden die benötigten Gebindelagen in einem Hochregal vorgehalten.
In dem Vorrichtungsanspruch 12 dieses Dokuments werden im Wesentlichen eine Warenhaltevorrichtung, ein Lagerverwaltungssystem, eine automatische Beladevorrichtung und ein autarkes Transportfahrzeug, sowie eine Palettierstation mit einem Palettierroboter beansprucht.
Im Lagerverwaltungssystem nach Anspruch 25 wird im Wesentlichen das Zusammenspiel der vorher beanspruchten Komponenten während des Beladens einer gemischten Palette beschrieben.
Im Anspruch 31 wird die Verwendung eines autarken Transportfahrzeugs gesondert beansprucht.

Das Dokument DE 10 2008 035 178 A1 offenbart eine Vorrichtung zum effektiven Zusammenstellen von Kommissionspaletten mit einem Eingangslager mit sortenreinen Quellpaletten, mit einer Station zum Verlagern von Einzellagen sortenreines Palettenguts und mit Kommissionierungsstationen zur Zusammenstellung individueller Kommissionen.

In der DE 10 2009 056 639 A1 wird ein Verfahren und eine Vorrichtung zur automatisierten Kommissionierung von Gebinden behandelt. Im Anspruch 1 dieses Dokuments wird ein Verfahren zur automatisierten Kommissionierung von Gebinden beansprucht, das die folgenden Schritte umfasst:
1) das Bereitstellen von unterschiedlichen Quellpaletten, und
2) das Palettieren wenigstens einer Zielpalette, gekennzeichnet durch
3) eine wechselnde und/oder variabel vorgegebene Vereinzelung und Magazinierung von Gebindelagen von unterschiedlichen Quellpaletten; und/oder
4) eine gestapelte Magazinierung und/oder Entmagazinierung von Gebinden oder Gebindegruppen vor dem Palettieren einer Zielpalette; und/oder
5) ein wahlweises Palettieren einer Zielpalette mit wenigstens einer unvereinzelten Gebindelage einer Quellpalette.

In der DE 20 2011 003 469 U1 ist eine Vorrichtung zum definierten Zwischenlagern und Kommissionieren produzierter Waren gleicher Art, aber unterschiedlicher Größe beschrieben.

Diese Vorrichtung weist eine Vielzahl von Transportfahrzeugen zum Transport von Stapel - Lafetten auf, wobei die Transportfahrzeuge mittels einer Mehrzahl von Induktions - Leitungen zur Stromversorgung und Steuerung bewegt und gesteuert werden.

Es ist die Aufgabe der vorliegenden Erfindung ein effektives Zusammenstellen von Kommissionspaletten zu ermöglichen bei dem der jeweilige Beladungsvorgang schnell und sicher ausgeführt wird.

Diese Aufgabe wird durch die Vorrichtung nach Anspruch 1:
Vorrichtung zum effektiven Zusammenstellen von Kommissions - Paletten mit den folgenden Merkmalen:
   a) einem Eingangslager ( 17 ) mit sortenreinen Quellpaletten ( 2 ),
   b) einer Station ( 22 ) zum Entfernen von Umhüllungsmaterial der Quellpaletten ( 2 ),
   c) einem großen Transportgestell ( 3 ) zum Transport von Paletten mit sortenreinem Palettengut ( 1 ),
   d) einem kleinen Transportgestell ( 7 ) zum Transport von Paletten mit einer Einzellage an sortenreinem Palettengut ( 4 ),
   e) einer Vielzahl von, mittels im Bodenbereich installierten Leitungen ( 10 ) induktiv mit Energie versorgten und elektronisch, bzw. elektrisch, gesteuerten Transportfahrzeugen ( 9 ) zur Bewegung eines großen ( 3 ) und / oder eines kleinen ( 7 ) Transportgestells, wobei das Transportfahrzeug ( 9 ) jeweils unter ein Transportgestell ( 3,7 ) verfahrbar ist und mit diesem mittels einer steuerbaren Kupplung ( 8 ) verbunden werden kann,
   f) einer steuerbaren Kupplung ( 6 ) mittels derer ein Transportgestell ( 7 ) mit einem Transportgestell ( 3 ) verbunden werden kann,
   g) einer Station ( 21 ) zur Verlagerung einer Einzellage ( 4 ) sortenreines Palettengut ( 1 ) von einem großen Transportgestell ( 3 ) auf ein kleines Transportgestell ( 7 ),
   h) Kommissionierungsstationen zur Zusammenstellung individueller Kommissionen ( 18,20, 24 ),
   i) Aufzüge ( 35 ) zum Verlagern fertiger Kommissionen in einen Transportbereich in einem Zwischengeschoß.

Anspruch 2:
   Vorrichtung nach Anspruch 1,
   dadurch gekennzeichnet,
   dass die Station ( 22 ) zum Entfernen von Folie ( 28 ) auf Palettengut ( 1 ) eine Saugvorrichtung ( 29 ), eine Luftlanze ( 30 ) und einen
   Messerschuh ( 32 ) mit einem Trennmesser ( 31 ) aufweist.
Anspruch 3:
   Vorrichtung nach Anspruch 1 oder 2,
   dadurch gekennzeichnet,
   dass die Station ( 21 ) zur Verlagerung einer Einzellage ( 4 ) von sortenreinem Palettengut ( 1 ) mindestens ein Portal ( 26 ) und
   mindestens einen Lagengreifer ( 27 ) aufweist.
Anspruch 4:
   Vorrichtung nach einem der Ansprüche 1 bis 3,
   dadurch gekennzeichnet,
   dass ein Blocklager ( 23 ) zum Vorhalten von Paletten mit Aufzügen ( 35 ) in ein weiteres Zwischengeschoß und Drehplätzen ( 33 ) für
   Richtungsänderungen von Paletten eingerichtet ist.
Anspruch 5:
   Vorrichtung nach einem der Ansprüche 1 bis 4,
   dadurch gekennzeichnet,
   dass zur Behandlung von Kommissionen mit schwierig zu handhabenden Einzelgebinden eine Kommissionierungs - Station ( 24 )
   mit manuellem Einsatz eingerichtet ist.
Anspruch 6:
   Vorrichtung nach einem der Ansprüche 1 bis 5,
   dadurch gekennzeichnet,
   dass zum reibungslosen Ablauf von Kommissionierungen Sequenzpuffer ( 19, 22,24, 25a ) eingesetzt werden.
bzw. das Verfahren nach Anspruch 7:
   Verfahren zum effektiven Zusammenstellen von Kommissions - Paletten mit den folgenden Merkmalen:
      a) es wird jeweils eine sortenreine Quellpalette ( 2 ) einem Eingangslager (17 ) entnommen und in einer Station ( 22 ) von ihrer Umhüllung befreit, wobei die Quellpalette ( 2 ) auf einem Transportgestell ( 3 ), das mittels eines Transportfahrzeugs ( 9 ) bewegt wird, befördert wird, und wobei das Transportfahrzeug ( 9 ) auf induktivem Weg angetrieben und gesteuert wird,
      b) die Quellpalette ( 2 ) wird zu einer Station ( 21 ) gefahren, in der die oberste Einzellage ( 4 ) von einer Greifvorrichtung ( 27 ) abgehoben und auf ein weiteres Transportgestell ( 3 ) gesetzt wird, wobei das Transportgestell ( 3 ) ebenfalls von einem Transportfahrzeug ( 9 ) auf induktivem Weg angetrieben und gesteuert wird,
      c) das Transportgestell ( 9 ) und das Transportgestell ( 3 ) werden mechanisch mittels einer Kupplung ( 6 ) verbunden und das so entstandene Verbundfahrzeug wird zu einem Blocklager (23 ) gefahren.
      d) die einzelnen Lagen der zu bestückenden Kommissions - Paletten werden dann sukzessive aus den Beständen des Blocklagers ( 23 ) zusammen gestellt, wobei Paletten aus sortenreinen Lagen in einer Station ( 20 ), Paletten aus gemischten Lagen in einer Station ( 18 ) und Paletten mit schwierig zu behandelnden Einzelgebinden in einer Station ( 24 ) bearbeitet werden,
      e) fertig gestellte Kommissionen werden mittels Aufzügen ( 35) in ein Zwischengeschoß zum Abtransport verbracht.
Anspruch 8:
   Verfahren nach Anspruch 7,
   dadurch gekennzeichnet,
   dass in der Station ( 21 ) die von einer Palette zu entfernende Folie ( 28 ) mittels einer Saugvorrichtung ( 29 )vom Palettengut ( 1 ) abgehoben, von einer Luftlanze ( 30 ) durchstoßen, mit Druckluft beaufschlagt und mittels eines Trennmessers ( 31 ) in einem Messerschuh ( 32 ) aufgeschlitzt wird.
Anspruch 9:
   Verfahren nach Anspruch 7 oder 8,
   dadurch gekennzeichnet,
   dass ein Blocklager ( 23 ) zum Vorhalten von Paletten mit Aufzügen ( 35 ) in ein weiteres Zwischengeschoß und Drehplätzen ( 33 ) für Richtungsänderungen von Paletten eingerichtet ist, und dass zum reibungslosen Ablauf von Kommissionierungen Sequenzpuffer ( 19, 22,24, 25a ) eingesetzt werden.
Anspruch 10:
   Maschinenlesbarer Träger mit dem Programmcode eines Computerprogramms zur Durchführung des Verfahrens nach einem der Ansprüche 7 bis 9, wenn das Programm in einem Computer ausgeführt wird.
gelöst.

Die erfindungsgemäße Vorrichtung wird im Folgenden näher beschrieben.

Es zeigen im Einzelnen:
Fig. 1: eine dreidimensionale Ansicht zweier erfindungsgemäßer Transportgestelle
Fig. 2: einen Querschnitt durch zwei erfindungsgemäße Transportgestelle
Fig. 3: einen Querschnitt durch verschieden bestückte Paletten
Fig.4: eine Draufsicht auf eine erfindungsgemäße Anlage

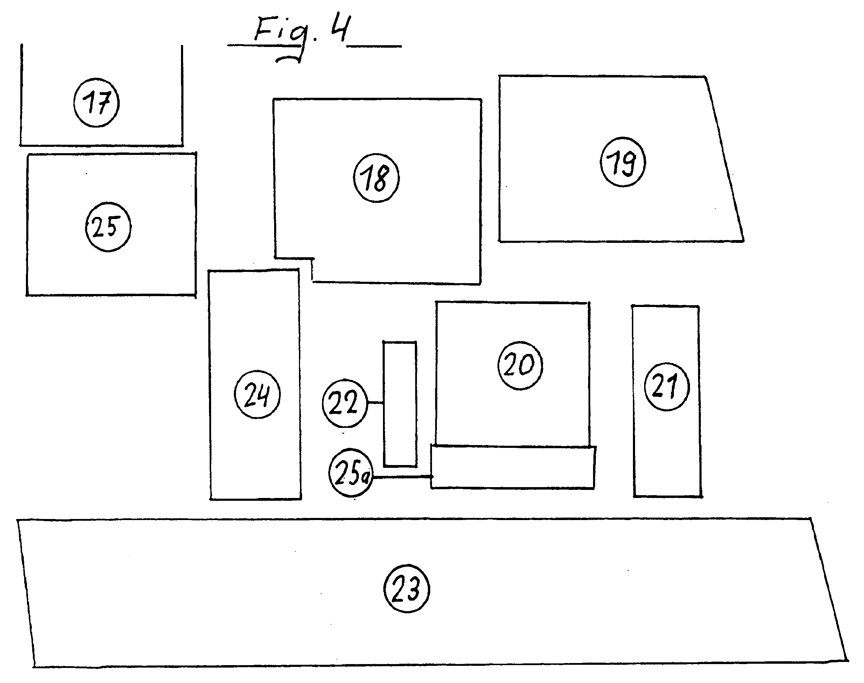

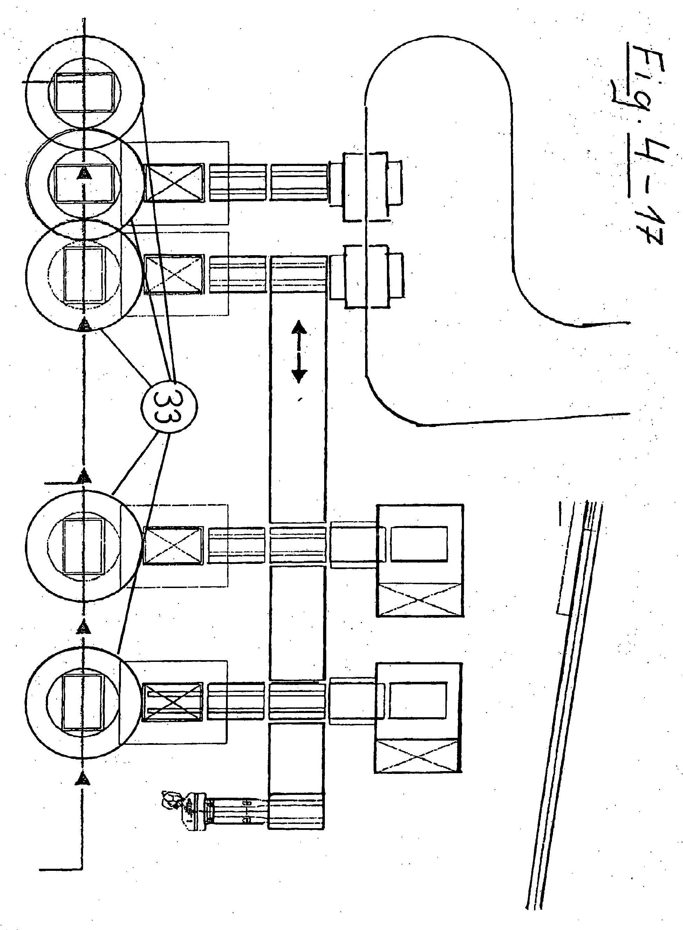

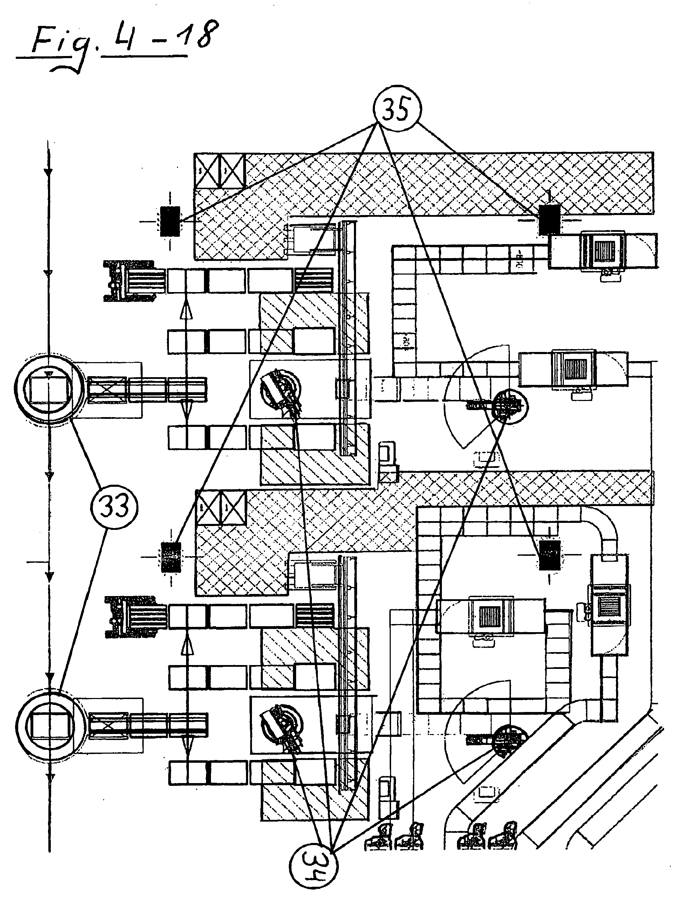

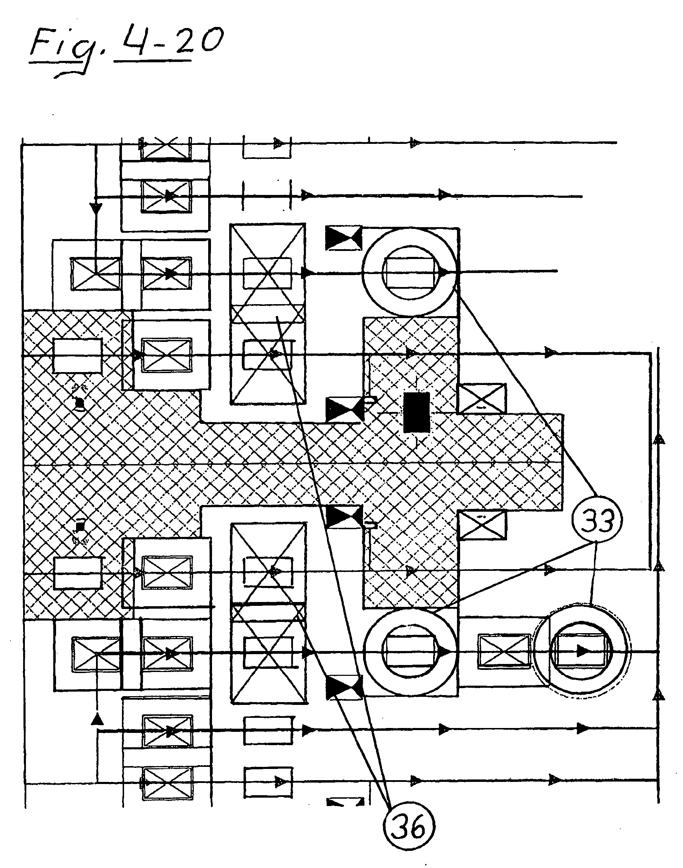

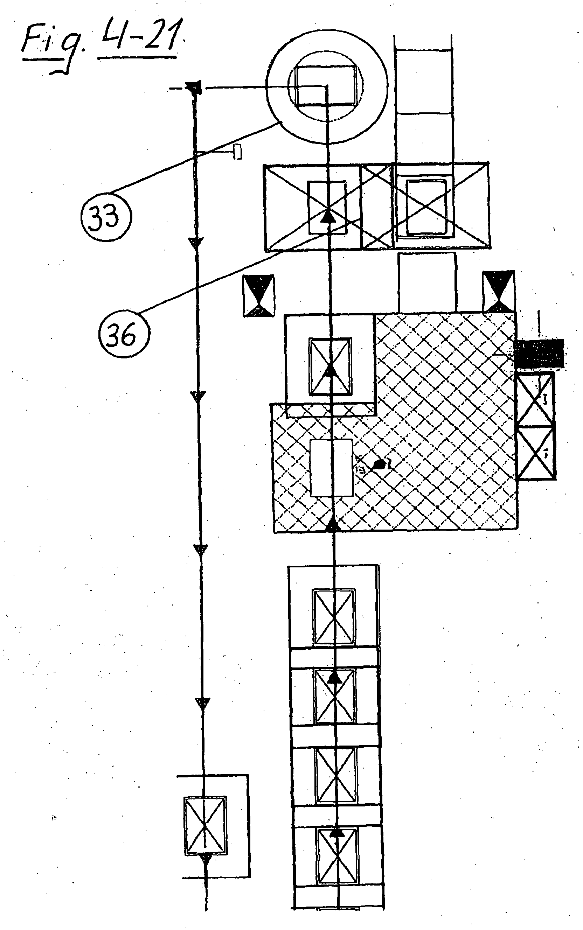

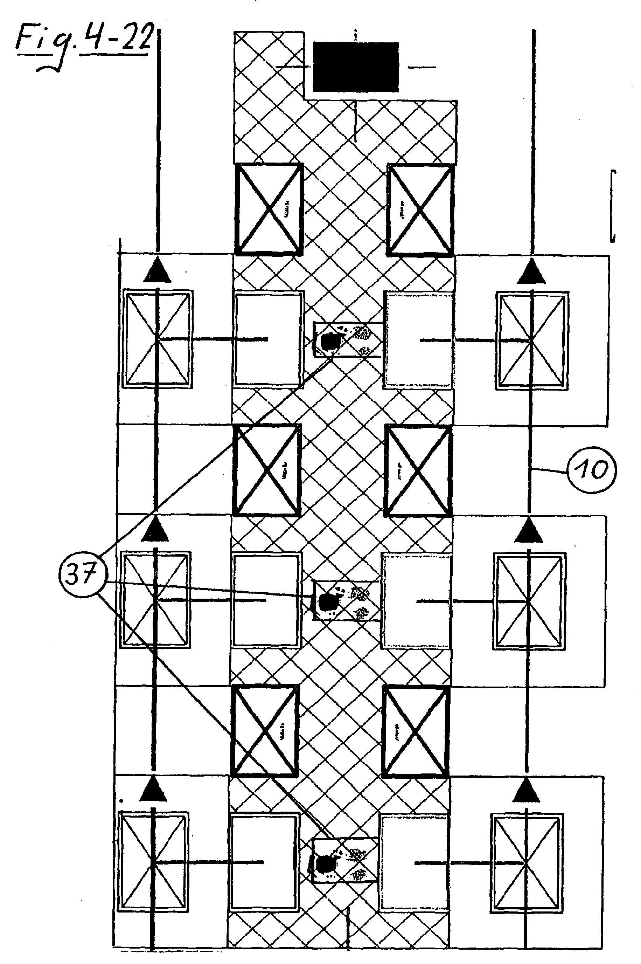

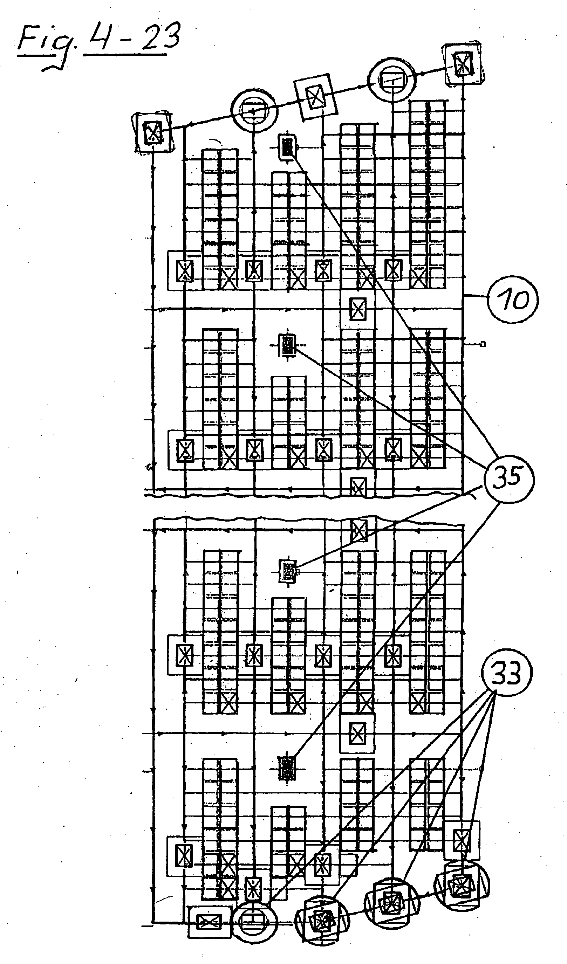

Fig. 4-17 :eine Detailansicht des Eingangslagers 17
Fig. 4-18: eine Detailansicht der Kommissionierungs - Station 18 für Einzelgebinde
Fig. 4-20: eine Detailansicht der Kommissionierungs - Station für 20 Lagengebinde
Fig. 4-21: eine Detailansicht der Station 21 für Umpalettierung
Fig. 4-22: eine Detailansicht der Station 22 zum Entfernen von Folien
Fig. 4-23: eine Detailansicht des Blocklagers 23

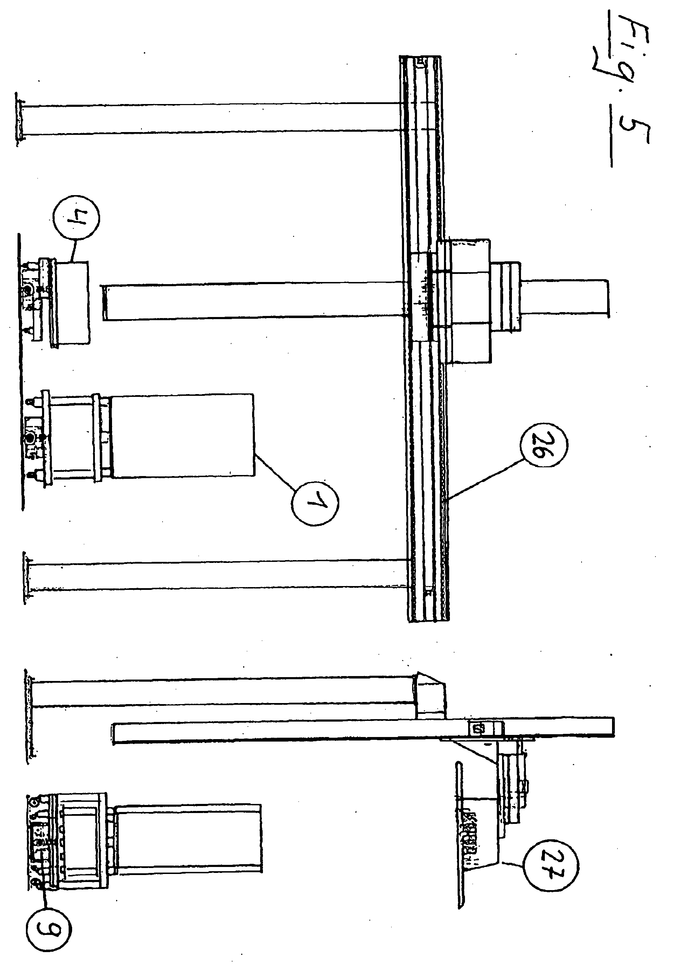

Fig. 5: einen Querschnitt durch die Station 21 für Umpalettierungen

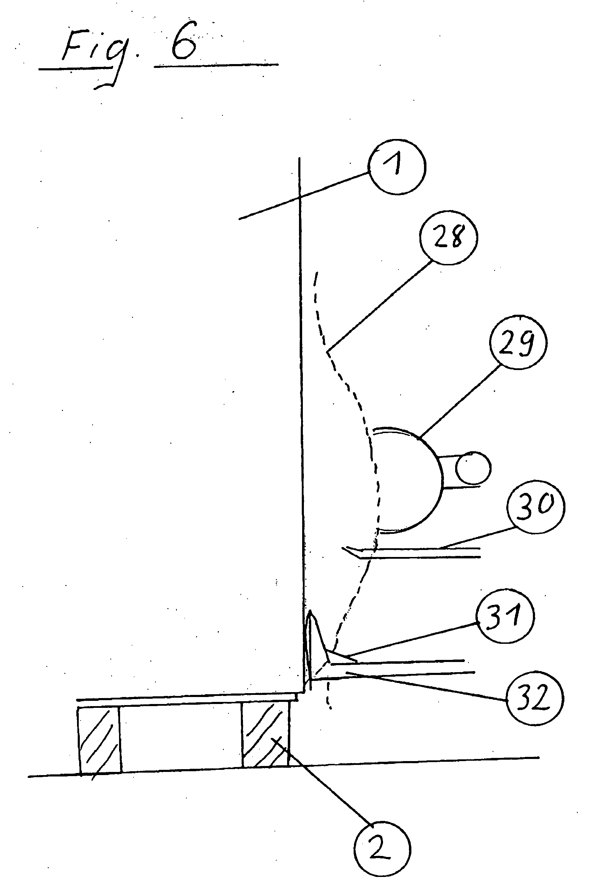

Fig. 6:eine Vorrichtung zum Entfernen von Folien

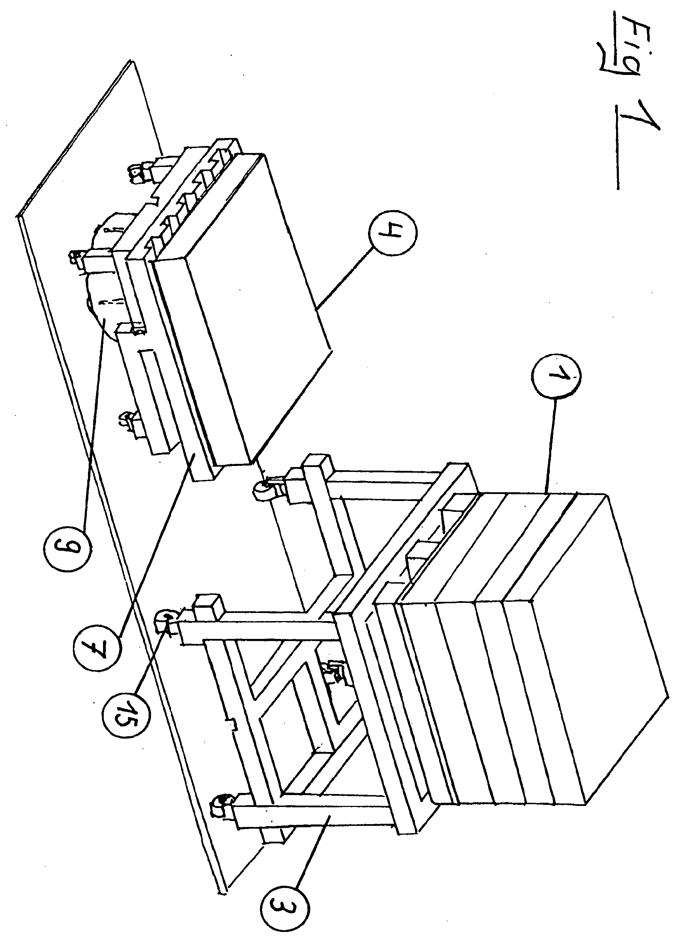

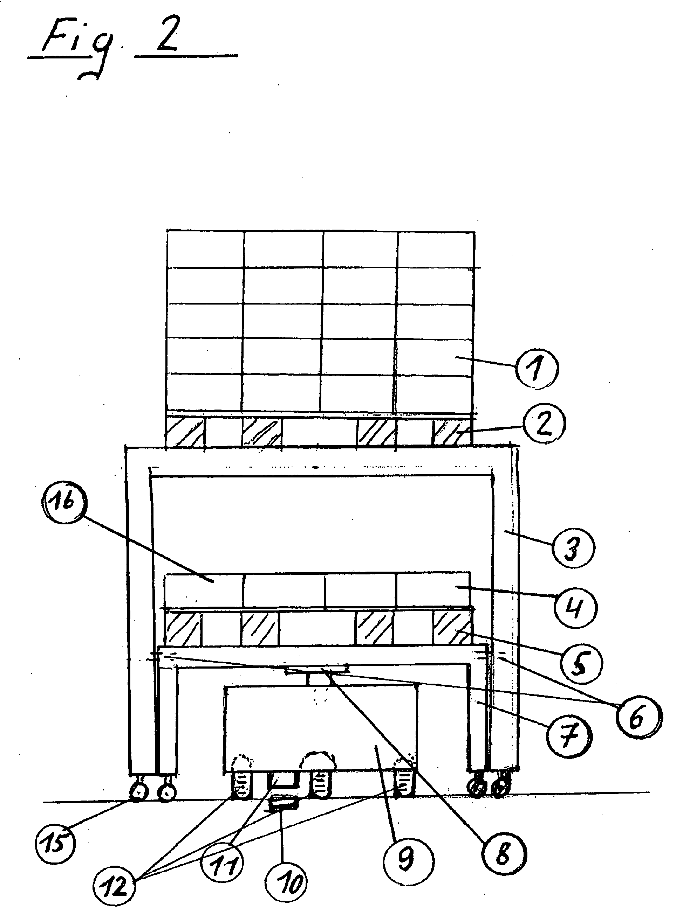

Die Fig. 1 zeigt eine dreidimensionale Ansicht zweier erfindungsgemäßer Transportgestelle, nämlich eines größeren Transportgestells 3 und eines kleineren Transportgestells 7.
Auf dem größeren Transportgestell 3 sind hier mehrere Lagen sortenreines Palettengut 1 gelagert, auf dem kleineren Transportgestell befindet sich nur eine Einzellage 4 sortenreines Palettengut. Das weiter gezeigte Transportfahrzeug 9 unter dem kleineren Transportgestell 7 dient der Bewegung dieses Transportgestells 7 im Bereich der gesamten Anlage und, wie hier gezeigt, auch zu der Einfahrt in das größere Transportgestell 3. Hierbei ist das Transportfahrzeug 9 mit dem kleineren Transportgestell 7 über eine funktechnisch einschaltbare Kupplung verbunden. Nähere Einzelheiten sind der Fig.2 zu entnehmen. Es besteht weiter die Möglichkeit das kleinere, in das größere Transportgestell 3 hinein gefahrene, Transportgestell 7 mit dem Transportgestell 3 über eine weitere Kupplung funktechnisch zu verbinden. Es kann jedoch auch ein Transportfahrzeug 9 ein einzelnes größeres Transportgestell 3 über eine entsprechende Kupplung im Bereich der gesamten Anlage auf entsprechenden Bahnen verfahren. Näheres ist der Beschreibung der Fig. 2 zu entnehmen. Hieraus ist ersichtlich, dass die Transportfahrzeuge 9 autark sind und bei Bedarf zur Beförderung jedes Transportgestells 3 oder 9, oder eines Verbunds aus einem größeren und einem kleineren Fahrgestell 3 und 9, herangezogen werden können.
Die zugehörigen Laufrollen des Transportgestells 3 in der Fig.1 sind mit 15 bezeichnet. Das Transportgestell 7 weist ebenso, wie das Transportgestell 3, vier, hier nicht näher bezeichnete, Laufrollen 15 auf.

In der Fig.2 ist ein Querschnitt durch die beiden, in der Fig.1 dargestellten, Transportgestelle 3 und 7 dargestellt.
Hier ist zu sehen, dass das kleinere Transportgestell 7 unter, bzw. in, das größere Transportgestell 3 gefahren wurde. In dieser Stellung können beide Transportgestelle mechanisch miteinander mittels einer stilisiert eingezeichneten Kupplung 5 verbunden werden. Zur Bewegung der somit vereinten Transportgestelle 3 und 7 ist dann lediglich nur noch ein Transportfahrzeug 9 erforderlich.
Zusätzlich zu der Darstellung in der Fig.1 sind die auf dem Transportgestell 3 aufliegende Palette 2 mit sortenreinem Palettengut 1, die auf dem Transportgestell 7 aufliegende Palette 5 mit einer Einzellage 4 eines sortenreinen Palettenguts und mit einem in dieser Einzellage befindlichen Einzelgebinde 16, gekennzeichnet.
In dem gezeigten Querschnitt ist die, die mechanische Verbindung zwischen dem Transportfahrzeug 9 und dem kleineren Transportgestell 7 herstellende, Kupplung 8 im Querschnitt zu erkennen. Die Antriebsräder eines Transportfahrzeugs 9 sind mit 12 bezeichnet.

Zur mechanischen Verbindung, und damit gemeinsamen Fahrt, eines großen und eines kleinen Fahrgestells 3 und 7, dient, wie schon oben erwähnt, ein Mechanismus in der Form einer weiteren Kupplung 6, hier in der stilisierten Form zweier Stifte links und rechts im Fahrgestell. Eine solche Kupplung 6 kann elektromechanisch ausgeführt sein und wird funktechnisch betätigt.
Die Zufuhr der Energie für den Antrieb eines Transportfahrzeugs 9 erfolgt induktiv mittels einer Leitung 10. Der entsprechende Induktions - Empfänger 11 befindet sich möglichst bodennahe an der Unterseite des jeweiligen Transportfahrzeugs 9. Diese Leitungen 10 sind entsprechend den gewünschten Bewegungslinien der Transportfahrzeuge 9 in der jeweiligen Kommissionierungs - Anlage im Boden verlegt. Das Layout der Struktur dieser Bewegungslinien, also das detaillierte Sichtbarmachen eines gezeichneten Abbilds der zufahrenden Verkehrswege, und damit einer späteren tatsächlichen Kabelverlegung, beinhaltet notwendige redundante Fahrwege und Parkplätze, sowie entsprechende Weichen.
Im Verbund mit den Leitungen zur induktiven Stromzuführung erfolgt die Verlegung der benötigten Steuerleitungen für den Betrieb der Gesamtanlage.
Normalerweise erfolgt die Verlegung der Leitungen 10 während des Aufbaus des Fußbodens der Gesamtanlage und die so realisierte Struktur ist später nur noch schwer zu ändern.
In einer besonderen Ausführungsform wird deshalb vorgeschlagen, im gesamten Bereich der zu erstellenden Anlage, oder in Teilbereichen, anstelle fest verlegter Induktionskabel großflächige Platten mit vorgegebenen Teilstrukturen energiezuführender Induktionskabel und Steuerleitungen zu verlegen. Hierbei müssen diese vorgefertigten Platten über genormte Anschluss - Elemente verfügen, die ein flexibles Zusammensetzen und ein reibungsloses Einbinden dieser Platten untereinander, und in eine evtl. schon bestehende Struktur, ermöglichen.

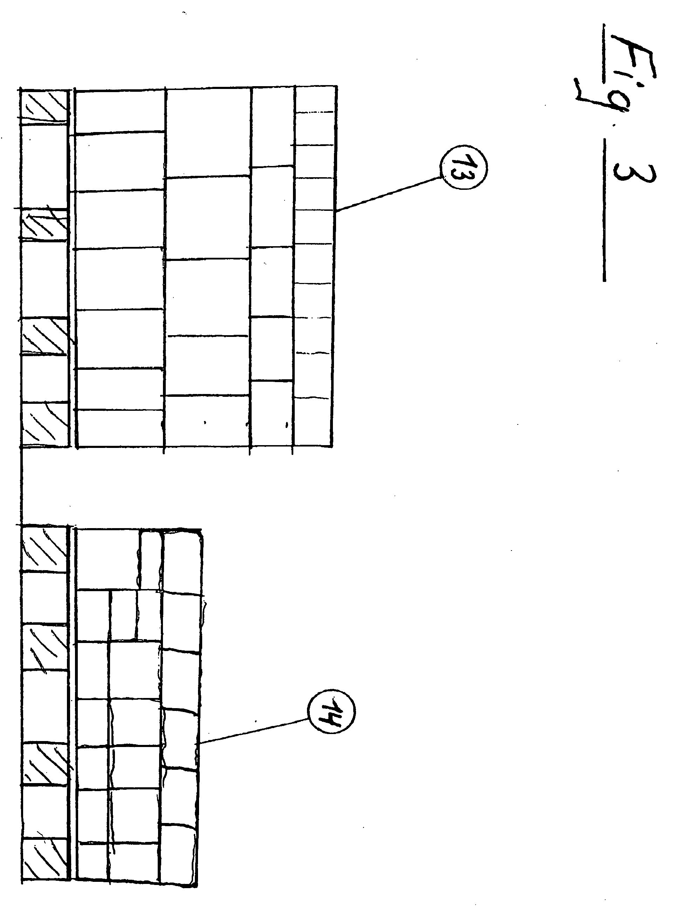

Fig. 3 zeigt einen Querschnitt durch verschieden bestückte Paletten.
Auf der linken Seite ist hier der Querschnitt einer Palette gezeigt, die lediglich verschiedene Lagen an jeweils sortenreinen Material - Lagen 13 aufweist, einer so genannten Regenbogen - Palette.
Auf der rechten Seite ist der Querschnitt einer Palette dargestellt, die Lagen unterschiedlicher Art zum Inhalt hat, einer so genannten gemischten Palette.

Fig.4 zeigt eine Draufsicht auf eine erfindungsgemäße Anlage in der die jeweiligen Stationen aus Gründen der besseren Übersicht in der Form von Funktionsblöcken dargestellt sind.
In der linken oberen Ecke der gezeigten Gesamtdarstellung ist eine Station dargestellt, die die Anlieferung von Quellpaletten verschiedener Zulieferer betrifft. Dieses Eingangslager 17 kann in der Form eines Hochregals angelegt sein oder eine andere beliebige Struktur aufweisen. Auf welche Art und Weise diese Quellpaletten angeliefert werden ist hierbei beliebig.

Eine Detailansicht des Eingangslagers 17 ist in der Fig. 4-17 dargestellt.
Links oben ist hier der Zufahrtsbereich von Lastkraftwagen oder anderen Fahrzeugen zu sehen, der zwei Abladeplätze für Paletten aufweist. Der in der Mitte dargestellte Doppelpfeil kennzeichnet einen Fahrweg für den Transport von Paletten, wobei an seinem Ende auf der rechten Seite ein Transportarbeiter mit einem Gabelstapler skizziert ist. Die fünf gezeigten Kreise symbolisieren Drehplätze 33 für die Paletten.

Wird aus dem Eingangslager 17 mindestens ein Element aus einer bestimmten Lage einer Quellpalette benötigt, muss bei dieser Palette die üblicherweise sie umhüllende Schutzfolie entfernt werden. Zu diesem Zweck wird sie mittels eines üblichen Greifers auf ein Transportgestell 3 verladen und durch ein Transportfahrzeug 9 zu der Station 22, etwa in der Mitte der in der Fig. 4 gezeigten Darstellung, zum Entfernen von Folien erfahren. Das Entfernen der entsprechenden Folie erfolgt in der Regel per Hand.
In einer besonderen Ausgestaltung wird das Entfernen der Folie mittels einer lokalen Perforierung und der Anwendung von Saugluft, bzw. Druckluft in Verbindung mit, die Folie ergreifenden und diese abreißenden, Greifern vorgeschlagen. Näheres ist der
Fig. 6 und deren Beschreibung zu entnehmen.

Eine Detailansicht der Station 22 ist in der Fig.4-22 dargestellt.
Hier sind, neben den stilisierten Fahrwegen von Paletten, in der Mitte drei derartige Defoliervorrichtungen 37 zum maschinellen Entfernen von Folie dargestellt.
Im Allgemeinen gelangen die Paletten nach dem Entfernen der Folie in das Blocklager 23. Von dort werden sie zum Umpalettieren gefahren, wie im Folgenden beschrieben, und werden sodann, wenn nicht sofort benötigt, zur späteren Verwendung wieder ins Blocklager 23 zurück gefahren.

Eine Detailansicht des Blocklagers 23 ist in der Fig. 4-23 dargestellt.
Neben den zahlreichen Abstellplätzen von Paletten sind in Mitte auf einer horizontalen Linie vier kleine schraffierte Rechtecke als Markierungen für Aufzüge 35 in ein Zwischengeschoß zu erkennen. Auf der rechten Seite sind vier Drehplätze 33 für Paletten zu sehen. Außerdem sind hier Leitungen 10 zur induktiven Stromzuführung und zur Steuerung gekennzeichnet.
Da von der jeweiligen sortenreinen Quellpalette entweder eine oder mehrere sortenreine Lagen oder ein Teil einer solchen Lage benötigt werden, wird die jeweilige, von ihrer Folie befreite, Palette mittels eines großen Transportgestells 3 und eines Transportfahrzeugs 9 in die Station 21 zur Umpalettierung verfahren. Näheres hierzu ist der Fig.5 zu entnehmen.

Eine Detailansicht der Station 21 ist in der Fig. 4-21 dargestellt.
Auch hier ist wieder ein Drehplatz 33 markiert. Als wichtigstes Funktionselement ist hier ein Portalstapler 36 hervorzuheben.

Diese Station 21 ist am rechten Rand der, in der Fig.4 gezeigten, Darstellung zu erkennen. In dieser Station 21 wird von einer sortenreinen Palette die oberste Lage mittels eines Lagengreifers abgehoben und auf ein bereit stehendes kleines Transportgestell 7 gemäß Fig.1 gesetzt. Danach werden die beiden Transportgestelle 3 und 7 elektromechanisch funkgesteuert miteinander verbunden. Die weitere Bewegung dieses Verbund - Transports erfolgt mittels des Transportfahrzeugs 9 des kleinen Transportgestells 7.
Der Vorteil dieses Verbundsystems liegt darin, dass auf diese Weise am gewünschten Ort sowohl eine bestimmte sortenreine Lage vom großen Transportgestell 3, als auch ein Einzelgebinde vom kleinen Transportgestell 7 entnommen werden kann. Es wird auf diese Weise nicht nur ein zusätzlich zu unterhaltendes aufwendiges Lager für Einzelgebinde eingespart, sondern es besteht der Vorteil, dass solche Einzelgebinde schon auf einem Transportgestell 7 einsatzbereit gelagert sind.

Die soweit vorbereiteten verbundenen sortenreinen Paletten werden im Blocklager 23, in der Darstellung der Fig.4 am unteren Rand, vorgehalten und nach Bedarf abgerufen.
Für die weitere Zusammenstellung von Kommissionen bestehen nun im Wesentlichen die beiden Möglichkeiten, dass eine Kommission bestehend aus reinen Lagen in der Form einer Regenbogen - Palette gewünscht wird, oder eine Kommission aus gemischten Gebinden zusammen gestellt werden muss.
Bei dem Vorliegen einer Lagenkommissionierung nach Art einer Regenbogen - Palette wird im Bereich der Station 20 entsprechend jeder gewünschten Lage jeweils ein entsprechendes Transportgestell zu der betreffenden Zielpalette gefahren, die betreffende Lage maschinell abgehoben, auf die Zielpalette wieder aufgesetzt und somit die gesamte Lieferung sukzessive zusammen gestellt.

Eine Detailansicht der Station 20 ist in der Fig.4-20 dargestellt. Hier sind drei Drehplätze 33 zu erkennen. Ferner befinden sich in dieser Station 20 zwei Portalstapier 36.

Da der reibungslose Ablauf der Lagenkommissionierung ein Zwischenlager zum vorübergehenden Lagern von, den reibungslosen Ablauf störenden, Transporten erfordert, ist neben der Station 20 ein Sequenzpuffer 25 a vorgesehen.
Der Abtransport einer solchen Lagenkommissionierung erfolgt mittels Liftanlagen, bzw. Aufzügen, die in ein, nicht dargestelltes, Zwischengeschoß führen. Hier werden diese Kommissionierungen auf die bereit stehenden Fahrzeuge verladen.

Bei dem Vorliegen einer Kommissionierung von Einzelgebinden und gemischten Gebinden wird die Kommissionierungs - Station 18 zur Kommissionierung von gemischten Paletten eingesetzt. Auch hier gilt, dass zur Beladung der betreffenden Zielpalette die entsprechenden Transportgestelle mit den jeweils erforderlichen Lagen oder auch Einzelgebinden rechnergesteuert angefordert werden, diese Station anfahren, und die betreffenden Bestandteile maschinell auf die Zielpalette aufgesetzt werden.

Eine Detailansicht der Station 18 ist in der Fig.4-18 dargestellt. Hier sind vier Aufzüge 35 zu erkennen und zwei Drehplätze 33 für Paletten. Vier Stapelroboter 34 sorgen für die Verteilung von Lagen und / oder Einzelgebinden.

Der reibungslose Ablauf der Kommissionierung von Einzelgebinden wird mittels des Sequenzpuffers 19 für Einzelgebinde sichergestellt. Der Abtransport einer solchen Kommissionierung von Einzelgebinden und gemischten Paletten erfolgt ebenfalls mittels Liftanlagen die in ein, nicht dargestelltes, Zwischengeschoß führen.

Für die Kommissionierung von schwierig zu behandelnden Einzelgebinden ist die Kommissionierungs - Station 24 vorgesehen. Hier erfolgt die Kommissionierung noch von Hand. Da auch die Kommissionierungs - Station 24 und die Station 22 zum Entfernen von Folien einen Sequenzpuffer benötigen, ist hierfür der Sequenzpuffer 25 vorgesehen.

Fig.5 zeigt einen Querschnitt durch die Station 21 für Umpalettierungen. Hier sind auf der linken Seite ein Portal 26 und eine Einzellage 4 mit sortenreinem Palettengut auf einem kleinen Transportgestell und auf einem großen Transportgestell eine Palette mit sortenreinem Palettengut 1 dargestellt. Auf der rechten Seite der Fig.5 ist ein Lagengreifer 27 im Querschnitt zu erkennen. Zudem ist ein Transportfahrzeug 9 beim Transport eines Verbunds von einem kleinen und einem großen Transportgestell gekennzeichnet.

Fig.6 zeigt eine Vorrichtung zum Entfernen von Folien.
Die dargestellten Werkzeuge sind hierbei Teile einer maschinellen Vorrichtung die auf bekannte Weise die beschriebenen Bewegungen dieser Werkzeuge verursachen.
Beispielhaft ist hier die rechte untere Ecke einer mit artenreinem Palettengut 1 beladenen Palette 2 dargestellt. Die zu entfernende Folie 28 wird mittels einer Saugvorrichtung 29 vom Palettengut abgehoben und von einer Luftlanze 30 in der Nähe der Saugvorrichtung 29 durchstoßen. Auf diese Weise wird das Palettengut 1 durch die Luftlanze 30 nicht beschädigt. Mittels dieser Luftlanze 30 wird in der Folge Druckluft in den Raum zwischen dem Palettengut 1 und der umhüllenden Folie 28 geblasen, sodass sich die Folie 28 stark vom Palettengut 1 abhebt. Dies ermöglicht einem druckbelasteten Messerschuh 32 das Eindringen in den Raum hinter der Folie 28 ohne das Palettengut 1 zu verletzen. Mittels eines Trennmessers 31 in der Beuge des Messerschuhs 32 kann die Folie 28 in einer vertikalen Bewegung des Messerschuhs von der Palette 2 bis zur Oberkante des Palettenguts 1 aufgeschlitzt werden. Derselbe Vorgang kann gleichzeitig oder in Folge auf der gegenüber liegenden Seite der Palette 2 erfolgen. Das anschließende Erfassen der frei liegenden Folienflächen kann von Hand oder ebenfalls maschinell erfolgen.

Die komplexe Steuerung der beschriebenen Bewegungsabläufe erfordert ein spezielles Steuerprogramm.

### Bezugszeichentiste

- 1: sortenreines Palettengut
- 2: Palette
- 3: großes Transportgestell für eine sortenreine Palette
- 4: Einzellage sortenreines Palettengut
- 5: Palette
- 6: Kupplung für Transportgestell 3 und 7
- 7: kleines Transportgestell ( Einzellagen - Palette )
- 8: Kupplung für ein Transportfahrzeug
- 9: Transportfahrzeug
- 10: Leitung zur induktiven Stromzuführung und Steuerleitung
- 11: Induktions - Empfänger
- 12: Antriebsräder
- 13: sortenreine Lage einer Regenbogen - Palette
- 14: Lage einer gemischten Palette
- 15: Laufrolle
- 16: Einzelgebinde
- 17: Anbindung zum Eingangslager ( Hochregal )
- 18: Kommissionierungs - Station für Einzelgebinde
- 19: Sequenzpuffer für Einzelgebinde
- 20: Kommissionierungs - Station für Lagengebinde
- 21: Station für Umpalettierungen
- 22: Station zum Entfernen von Folien ( Defolierstation )
- 23: Blocklager
- 24: Kommissionierungs - Station für schwierige Einzelgebinde
- 25: Sequenzpuffer für 22 und 24
- 25a: Sequenzpuffer für Lagengebinde
- 26: Portal
- 27: Lagengreifer
- 28: Folie
- 29: Sauger
- 30: Luftlanze ( Pressluft )
- 31: Trennmesser
- 32: Messerschuh
- 33: Drehplatz
- 34: Stapelroboter
- 35: Aufzüge
- 36: Portalstapler
- 37: Defoliervorrichtung

## Patentansprüche

1. Vorrichtung zum effektiven Zusammenstellen von Kommissions-Paletten mit den folgenden Merkmalen:
a) einem Eingangslager (17) mit sortenreinen Quellpaletten (2),
b) einer Station (22) zum Entfernen von Umhüllungsmaterial der Quellpaletten (2),
c) einem großen Transportgestell (3) zum Transport von Paletten mit sortenreinem Palettengut (1),
d) einem kleinen Transportgestell (7) zum Transport von Paletten mit einer Einzellage an sortenreinem Palettengut (4),
e) einer Vielzahl von, mittels im Bodenbereich installierten Leitungen (10) induktiv mit Energie versorgten und elektronisch, bzw. elektrisch, gesteuerten Transportfahrzeugen (9) zur Bewegung eines großen (3) und/oder eines kleinen (7) Transportgestells, wobei das Transportfahrzeug (9) jeweils unter ein Transportgestell (3, 7) verfahrbar ist und mit diesem mittels einer steuerbaren Kupplung (8) verbunden werden kann,
f) einer steuerbaren Kupplung (6) mittels derer ein Transportgestell (7) mit einem Transportgestell (3) verbunden werden kann,
g) einer Station (21) zur Verlagerung einer Einzellage (4) sortenreines Palettengut (1) von einem großen Transportgestell (3) auf ein kleines Transportgestell (7),
h) Kommissionierungsstationen zur Zusammenstellung individueller Kommissionen (18, 20, 24),
i) Aufzüge (35) zum Verlagern fertiger Kommissionen in einen Transportbereich in einem Zwischengeschoß.

2. Vorrichtung nach Anspruch 1,
**dadurch gekennzeichnet,**
**dass** die Station (22) zum Entfernen von Folie (28) auf Palettengut (1) eine Saugvorrichtung (29), eine Luftlanze (30) und einen Messerschuh (32) mit einem Trennmesser (31) aufweist.

3. Vorrichtung nach Anspruch 1 oder 2,
**dadurch gekennzeichnet,**
**dass** die Station (21) zur Verlagerung einer Einzellage (4) von sortenreinem Palettengut (1) mindestens ein Portal (26) und mindestens einen Lagengreifer (27) aufweist.

4. Vorrichtung nach einem der Ansprüche 1 bis 3, **dadurch gekennzeichnet,**
**dass** ein Blocklager (23) zum Vorhalten von Paletten mit Aufzügen (35) in ein weiteres Zwischengeschoß und Drehplätzen (33) für Richtungsänderungen von Paletten eingerichtet ist.

5. Vorrichtung nach einem der Ansprüche 1 bis 4, **dadurch gekennzeichnet,**
**dass** zur Behandlung von Kommissionen mit schwierig zu handhabenden Einzelgebinden eine Kommissionierungs-Station (24) mit manuellem Einsatz eingerichtet ist.

6. Vorrichtung nach einem der Ansprüche 1 bis 5, **dadurch gekennzeichnet,**
**dass** zum reibungslosen Ablauf von Kommissionierungen Sequenzpuffer (19, 22, 24, 25a) eingesetzt werden.

7. Verfahren zum effektiven Zusammenstellen von Kommissions-Paletten mit den folgenden Merkmalen:
a) es wird jeweils eine sortenreine Quellpalette (2) einem Eingangslager (17) entnommen und in einer Station (22) von ihrer Umhüllung befreit, wobei die Quellpalette (2) auf einem Transportgestell (3), das mittels eines Transportfahrzeugs (9) bewegt wird, befördert wird, und wobei das Transportfahrzeug (9) auf induktivem Weg angetrieben und gesteuert wird,
b) die Quellpalette (2) wird zu einer Station (21) gefahren, in der die oberste Einzellage (4) von einer Greifvorrichtung (27) abgehoben und auf ein weiteres Transportgestell (3) gesetzt wird, wobei das Transportgestell (3) ebenfalls von einem Transportfahrzeug (9) auf induktivem Weg angetrieben und gesteuert wird,
c) das Transportgestell (9) und das Transportgestell (3) werden mechanisch mittels einer Kupplung (6) verbunden und das so entstandene Verbundfahrzeug wird zu einem Blocklager (23) gefahren.
d) die einzelnen Lagen der zu bestückenden Kommissions-Paletten werden dann sukzessive aus den Beständen des Blocklagers (23) zusammen gestellt, wobei Paletten aus sortenreinen Lagen in einer Station (20), Paletten aus gemischten Lagen in einer Station (18) und Paletten mit schwierig zu behandelnden Einzelgebinden in einer Station (24) bearbeitet werden,
e) fertig gestellte Kommissionen werden mittels Aufzügen (35) in ein Zwischengeschoß zum Abtransport verbracht.

8. Verfahren nach Anspruch 7,
**dadurch gekennzeichnet,**
**dass** in der Station (21) die von einer Palette zu entfernende Folie (28) mittels einer Saugvorrichtung (29) vom Palettengut (1) abgehoben, von einer Luftlanze (30) durchstoßen, mit Druckluft beaufschlagt und mittels eines Trennmessers (31) in einem Messerschuh (32) aufgeschlitzt wird.

9. Verfahren nach Anspruch 7 oder 8,
**dadurch gekennzeichnet,**
**dass** ein Blocklager (23) zum Vorhalten von Paletten mit Aufzügen (35) in ein weiteres Zwischengeschoß und Drehplätzen (33) für Richtungsänderungen von Paletten eingerichtet ist, und dass zum reibungslosen Ablauf von Kommissionierungen Sequenzpuffer (19, 22, 24, 25a) eingesetzt werden.

10. Maschinenlesbarer Träger mit dem Programmcode eines Computerprogramms zur Durchführung des Verfahrens nach einem der Ansprüche 7 bis 9, wenn das Programm in einem Computer ausgeführt wird.

## Claims

1. Device for effectively compiling commission pallets, having the following features:
a) an inward store (17) having mono-material source pallets (2),
b) a station (22) for removing sheathing material of the source pallets (2),
c) a large transport rack (3) for transporting pallets with mono-material pallet goods (1),
d) a small transport rack (7) for transporting pallets with a single layer of mono-material pallet goods (4),
e) a multiplicity of transport vehicles (9) which are supplied with power and are electronically or electrically controlled, respectively, by induction by means of lines (10) which are installed in the ground, for moving a large (3) and/or a small (7) transport rack, wherein the transport vehicle (9) is in each case displaceable below a transport rack (3, 7) and is connectable to the latter by means of a controllable coupling (8),
f) a controllable coupling (6) by means of which a transport rack (7) may be connected to a transport rack (3),
g) a station (21) for transferring a single layer (4) of mono-material pallet goods (1) from a large transport rack (3) to a small transport rack (7),
h) commissioning stations for compiling individual commissioning lots (18, 20, 24),
i) elevators (35) for transferring completed commissioning lots to a transport region on an intermediate level.

2. Device according to Claim 1,
**characterized in that**
the station (22) for removing a film (28) on pallet goods (1) has a suction device (29), an air lance (20), and a knife body (32) having a severing knife (31).

3. Device according to Claim 1 or 2, **characterized in that**
the station (21) for transferring a single layer (4) of mono-material pallet goods (1) has at least one portal (26) and at least one layer gripper (27) .

4. Device according to one of Claims 1 to 3, **characterized in that**
a block store (23) for keeping ready pallets is installed, having elevators (35) to a further intermediate level and turntables (33) for directional changes to pallets.

5. Device according to one of Claims 1 to 4, **characterized in that**
a commissioning station (24) with manual input for handling commissioning lots having packages which are difficult to manage is installed.

6. Device according to one of Claims 1 to 5, **characterized in that**
sequencing buffers (19, 22, 24, 25a) are employed for smooth processing of commissioning lots.

7. Method for effectively compiling commissioning pallets, having the following features:
a) in each case one mono-material source pallet (2) is removed from an inward store (17) and in a station (22) is relieved of its sheathing, wherein the source pallet (2) is conveyed on a transport rack (3) which is moved by means of a transport vehicle (9), and wherein the transport vehicle (9) is driven and controlled by induction,
b) the source pallet (2) is driven to a station (21) in which the uppermost single layer (4) is lifted by a gripper device (27) and is placed onto a further transport rack (3), wherein the transport rack (3) is likewise driven and controlled by induction by a transport vehicle (9),
c) the transport rack (9) and the transport rack (3) are mechanically connected by means of a coupling (6), and the composite vehicle thus created is driven to a block store (23),
d) the individual layers of the commissioning pallets to be filled are then successively compiled from the stock items of the block store (23), wherein pallets of mono-material layers are dealt with in one station (20), pallets of mixed layers are dealt with in one station (18), and pallets having packages which are difficult to handle are dealt with in one station (24),
e) completed commissioning lots for shipping are delivered by means of elevators (35) to an intermediate level.

8. Method according to Claim 7,
**characterized in that**
in the station (21) the film (28) which has to be removed from a pallet is lifted off the pallet goods (1) by means of a suction device (29), is pierced by an air lance (30), is impinged with compressed air, and is cut open by means of a severing knife (31) in a knife body (32).

9. Method according to Claim 7 or 8, **characterized in that**
a block store (23) for keeping ready pallets is installed, having elevators (35) to a further intermediate level and turntables (33) for directional changes to pallets, and **in that** sequencing buffers (19, 22, 24, 25a) are employed for smooth processing of commissioning lots.

10. Machine-readable carrier having the programming code of a computer program for carrying out the method according to one of Claims 7 to 9, if and when the program is executed in a computer.

## Revendications

1. Ensemble pour composer de manière efficace des palettes de colis, l'ensemble présentant les caractéristiques suivantes :
a) un entrepôt d'entrée (17) présentant des palettes d'origine (2) de produits identiques,
b) un poste (22) pour enlever le matériau d'enveloppe des palettes d'origine (2),
c) un grand bâti de transport (3) qui transporte les palettes contenant des produits (1) identiques,
d) un petit bâti de transport (7) qui transporte des palettes présentant une seule couche de produits (4) identiques,
e) plusieurs véhicules de transport (9) alimentés en énergie par voie inductive au moyen de conducteurs (10) installés au niveau du sol, et commandés électroniquement ou électriquement pour déplacer un grand bâti de transport (3) et/ou un petit bâti de transport (7), le véhicule de transport (9) pouvant être déplacé en dessous d'un bâti de transport (3, 7) et pouvant être relié à ce dernier au moyen d'un accouplement asservi (8),
f) un accouplement asservi (6) au moyen duquel un bâti de transport (7) peut être relié à un bâti de transport (3),
g) un poste (21) de déplacement d'une couche (4) de produits (1) identiques depuis un grand bâti de transport (3) jusque sur un petit bâti de transport (7),
h) des postes de colisage qui composent des colis individuels (18, 20, 24),
i) des ascenseurs (35) qui déplacent des colis terminés vers un étage intermédiaire d'une zone de transport.

2. Ensemble selon la revendication 1, **caractérisé en ce que** le poste (22) enlevant les feuilles (28) posées sur les produits (1) présente un ensemble d'aspiration (29), une lance à air (30) et un sabot de coupe (32) doté d'un couteau de coupe (31).

3. Ensemble selon les revendications 1 ou 2, **caractérisé en ce que** le poste (21) déplaçant une couche (4) de produits (1) identiques d'une palette présente au moins un portique (26) et au moins un dispositif (27) de saisie de couches.

4. Ensemble selon l'une des revendications 1 à 3, **caractérisé en ce qu'**un entrepôt (23) de blocs qui conserve des palettes est doté d'ascenseurs (35) dans un autre étage intermédiaire et d'emplacements de rotation (33) qui modifient la direction des palettes.

5. Ensemble selon l'une des revendications 1 à 4, **caractérisé en ce qu'**un poste de colisage (24) doté d'une garniture manuelle pour traiter des colis présentant des objets difficiles à manipuler est prévu.

6. Ensemble selon l'une des revendications 1 à 5, **caractérisé en ce que** des tampons de séquence (19, 22, 24, 25a) sont utilisés pour que le colisage se déroule sans discontinuités.

7. Procédé pour composer de manière efficace des palettes de colis, le procédé présentant les caractéristiques suivantes :
a) une palette d'origine (2) contenant des produits identiques est prélevée dans un entrepôt d'entrée (17) et est libérée de son enveloppe dans un poste (22), la palette d'origine (2) étant transportée sur un bâti de transport (3) déplacé au moyen d'un véhicule de transport (9), le véhicule de transport (9) étant entraîné et commandé par voie inductive,
b) la palette d'origine (2) est déplacée jusqu'à un poste (21) dans lequel la couche supérieure (4) est relevée au moyen d'un ensemble de saisie (27) et est placée sur un autre bâti de transport (3), le bâti de transport (3) étant également entraîné et commandé par voie inductive par un véhicule de transport (9),
c) le bâti de transport (9) et le bâti de transport (3) sont reliés mécaniquement au moyen d'un accouplement (6) et le véhicule combiné ainsi obtenu est transporté jusqu'à un entrepôt de blocs (23),
d) les différentes couches des palettes à remplir de colis sont alors successivement rassemblées à partir des réserves de l'entrepôt (23) de blocs, les palettes constituées de couches de produits identiques étant traitées dans un poste (20), les palettes constituées de couches de produits différents dans un poste (18) et les palettes présentant des objets difficiles à manipuler dans un poste (24) et
e) les colis terminés sont amenés vers le transport de sortie au moyen d'ascenseurs (35) d'un étage intermédiaire.

8. Procédé selon la revendication 7, **caractérisé en ce que** dans le poste (21), la feuille (28) à enlever d'une palette est relevée au moyen d'un ensemble d'aspiration (29) des produits (1) de la palette, percée par une lance (30) à air, alimentée en air comprimé et fendue au moyen d'un couteau de séparation (31) prévu dans un sabot de coupe (32).

9. Procédé selon les revendications 7 ou 8, **caractérisé en ce qu'**un entrepôt (23) de blocs qui assure la réserve de palettes est doté d'ascenseurs (35) dans un autre étage intermédiaire et d'emplacements de rotation (33) permettant de modifier la direction des palettes et **en ce que** des tampons de séquence (19, 22, 24, 25a) sont utilisés pour permettre un déroulement sans discontinuité du colisage.

10. Support lisible par machine et doté d'un code de programme d'un programme informatique permettant la mise en oeuvre du procédé selon l'une des revendications 7 à 9 lorsque le programme est exécuté dans un ordinateur.
